# EUROPEAN PATENT SPECIFICATION

(11) **EP 4 037 861 B1**
(45) Date of publication and mention of the grant of the patent: **14.05.2025**
(21) Application number: 20789746.3
(22) Date of filing: 23.09.2020
(51) Int. Cl.: B23K 1/00, B23K 1/008, B23K 1/19, F01D 5/00, B23K 101/00, B23K 103/18, B23K 103/00, F01D 17/08

(54) **METHOD OF PROCESSING A JOINT TO BE BRAZED**
VERFAHREN ZUR VERARBEITUNG EINER ZU LÖTENDEN VERBINDUNG
PROCÉDÉ DE TRAITEMENT D'UN JOINT À BRASER

(30) Priority: 01.10.2019 US 201916589902
(43) Date of publication of application: 10.08.2022
(73) Proprietor: General Electric Technology GmbH, 5400 Baden (CH)
(72) Inventor: WEIDEMANN, Kornelia, 79713 Bad Säckingen (DE); PUIDOKAS, Sabrina Michelle, 5400 Baden (CH)
(74) Representative: Novagraaf Group
(86) International application number: PCT/US2020/052108
(87) International publication number: WO 2021/067081

(56) References cited:
- DE-A1- 19 734 211
- DE-C2- 19 734 211
- JP-A- H10 194 860
- US-A1- 2016 370 241

## Description

### BACKGROUND

The present disclosure relates generally to active brazing and, more specifically, to a method of processing a joint as set forth in the appended claims.

Active brazing is a method that may be used to join ceramic and metallic elements, or to join ceramic elements to each other. The alloys used to form actively brazed joints are unique from other known brazing alloys in at least some respects. Specifically, active brazing alloys based on silver, gold, or copper, for example, typically contain a certain content of "active" elements (e.g., titanium), which enables these elements, under high vacuum, to react with a ceramic surface to form a reaction layer. The reaction layer extends between the ceramic element and the molten brazing alloy to act as a connection between the ceramic element and the brazing alloy. However, active brazing alloys are generally characterized by a relatively low melting point temperature. As such, the low melting point may adversely limit the use of actively brazed joints in high-temperature environments, such as in a hot gas path in gas turbine applications.
US 2016/370241 A1 suggests a method for manufacturing a pressure measuring cell, which has a ceramic platform and a ceramic measuring membrane, wherein the measuring membrane is joined with the platform pressure tightly by means of an active hard solder, or braze, wherein the method includes: providing the platform, the measuring membrane and the active hard solder, or braze, positioning the active hard solder, or braze, between the platform and the measuring membrane; melting the active hard solder, or braze, by irradiating the active hard solder, or braze, by means of a laser, wherein the irradiating of the active hard solder, or braze, occurs through the measuring membrane; and letting the active hard solder, or braze, solidify by cooling. Heating the solder by irradiation is performed to reduce overall heat intake and thus affect a faster cooling down of the solder such as to eliminate or at least reduce the formation of segregated phases. The teaching a based upon fast cooling of the solder. DE 197 34 211 A1 suggests a process for bonding ceramic parts together or to metals involves coating the surface of a ceramic part with a reactive component and then soldering it to the similarly coated surface of another ceramic part or to the surface of a metal part. DE 197 34 211 A1 is silent about the control of solder temperature over time and the kind of heating device used to heat the solder, or to perform the described method, respectively.

### BRIEF DESCRIPTION

According to a first aspect of the invention as herein claimed, a method of processing a joint as set forth in claim 1 is provided. Further embodiments of the invention as herein claimed are set forth in the dependent claims.

### BRIEF DESCRIPTION OF THE DRAWINGS

FIG. 1 is a side view illustration of an exemplary actively brazed joint.
FIG. 2 is an enlarged cross-sectional view of a portion of the actively brazed joint outlined in area 2 in FIG. 1.
FIG. 3 is an enlarged cross-sectional view of a portion of the actively brazed joint outlined in area 3 in FIG. 2.
FIG. 4 is a flow diagram illustrating an exemplary method of processing a joint.

### DETAILED DESCRIPTION

The embodiments described herein relate to methods of processing an actively brazed joint to increase its operating temperature capabilities. The methods described herein include forming an actively brazed joint in a vacuum furnace by heating a joining metal alloy, which is between two components, to a first temperature that is higher than the liquidus temperature of the alloy. After a predetermined dwell time (typically between about 10 minutes and about 30 minutes), the brazed joint is then cooled to a second temperature that is lower than the solidus temperature of the alloy, yet higher than room temperature. The temperature within the vacuum furnace is maintained at the second temperature for a predefined duration. It is believed, without being bound by any particular theory, that maintaining the vacuum furnace at the elevated second temperature for the predefined duration facilitates initiating diffusion phenomena within a volume of the alloy. The diffusion phenomena facilitates creating regions of segregated crystallization within the volume of the alloy. The regions of segregated crystallization include increased concentrations of the individual elements contained in the alloy. For example, after this process, it was found that a layer of brazed metal, formed from the joining metal alloy, between the two components had an increased liquidus temperature as compared to the joining metal alloy in its pre-processed state. As such, the resulting actively brazed joint may be used in environments having higher maximum operating temperatures.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item. As used herein, the term "upstream" refers to a forward or inlet end of a rotary machine, and the term "downstream" refers to a downstream or exhaust end of the rotary machine.

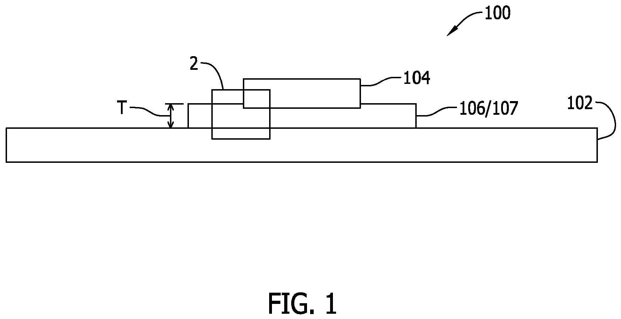

FIG. 1 is a side view illustration of an actively brazed joint 100. Exemplarily shown actively brazed joint 100 includes a first component 102, a second component 104, and a volume 106 of a joining metal alloy. First component 102 and second component 104 may be fabricated from any material that enables actively brazed joint 100 to function as described herein. First component 102 may be fabricated from either a ceramic material or a metallic material, and second component 104 may be fabricated from a ceramic material. For example, the metallic material may be, but is not limited to only being, a nickel-based superalloy material. Thus, in one embodiment, first component 102 is a hot gas path component, such as a rotating component or a stationary component, of a gas turbine engine, and second component 104 is a sensor used to monitor process conditions within the gas turbine engine.

Prior to being processed in accordance with the methods described herein, the joining metal alloy is positioned between first component 102 and second component 104. In its pre-processed state, volume 106 of joining metal alloy may have a thickness T defined within a range between about 50 microns and about 200 microns, and be in the form of a braze foil. The joining metal alloy is positioned to join first component 102 to second component 104. The joining metal alloy may include any combination of elements that enables actively brazed joint 100 to function as described herein. For example, in one embodiment, the joining metal alloy includes, but is not limited to only including, silver, copper, indium, and at least one active element. Exemplary active elements include, but are not limited to, titanium, hafnium, zirconium, and/or niobium. Thus, in an exemplary embodiment, the joining metal alloy includes silver defined within a range between about 55 percent and about 65 percent by weight, copper defined within a range between about 20 percent and about 30 percent by weight, indium defined within a range between about 5 percent and about 30 percent by weight, and titanium at less than about 10 percent by weight.

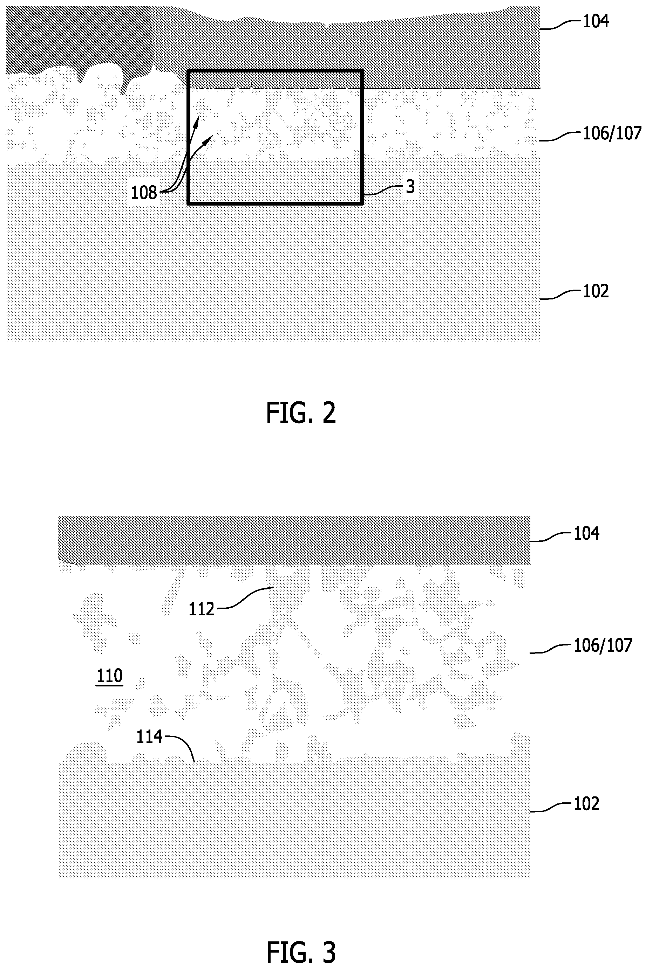

FIG. 2 is an enlarged cross-sectional view of a portion of actively brazed joint 100 shown in FIG. 1, and FIG. 3 is an enlarged cross-sectional view of a portion of actively brazed joint 100 shown in FIG. 2. In the exemplary embodiment, volume 106 of joining metal alloy includes a plurality of elements that each having a weight percentage that defines an overall composition of the joining metal alloy. By processing actively brazed joint 100 in accordance with the methods to be described in more detail below, a layer 107 of brazed metal, formed from volume 106 of the joining metal alloy, includes at least one region 108 of segregated crystallization. The weight percentage of at least one of the elements of the joining metal alloy is greater in the at least one region 108 than in the overall composition. It is believed, without being bound by any particular theory, that the heat treatment processing methodology described herein facilitates the segregation of phases (elements) within volume 106, wherein at least one of the individual phases, or each individual phase, has a higher melting point than the joining metal alloy as a whole. As such, performing the heat treatment processing described herein on actively brazed joint 100 facilitates increasing the operating temperature of the brazed metal.

Referring to FIG. 3, the at least one region 108 includes, for example, at least a first region 110, a second region 112, and a third region 114 of segregated crystallization that are each distinct from each other. In the exemplary embodiment, first region 110 has a greater weight percentage of a first element (e.g., silver) than within second region 112, third region 114, and the overall composition of the joining metal alloy. Likewise, second region 112 has a greater weight percentage of a second element (e.g., copper) than within first region 110, third region 114, and the overall composition of the joining metal alloy, and third region 114 has a greater weight percentage of a third element (e.g., titanium) than within first region 110, second region 112, and the overall composition of the joining metal alloy. In some embodiments, the first element, the second element, and the third element are the predominant element in each region 110, 112, and 114, in that each respective element has a greater weight percentage than any other elements included in each respective region 110, 112, and 114. The predominant element in each respective region 110, 112, and 114 may constitute less than about 50 percent, greater than about 25 percent, greater than about 50 percent, or greater than about 75 percent by weight of the composition of each region 110, 112, and 114.

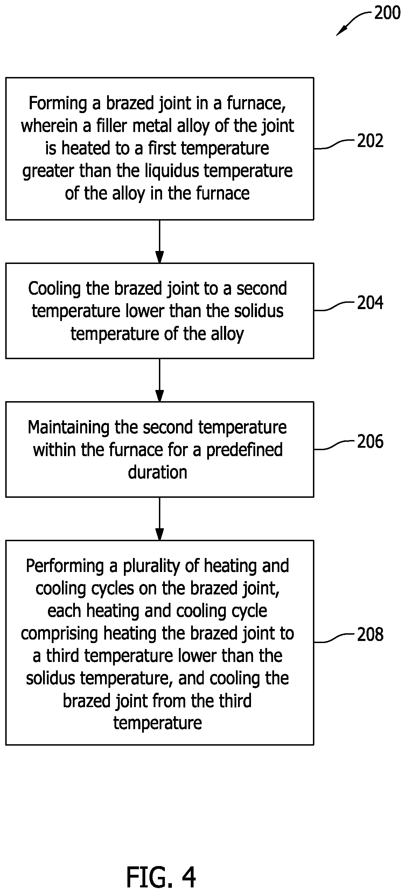

FIG. 4 is a flow diagram illustrating an exemplary method 200 of processing a joint. In the exemplary embodiment, method 200 includes forming 202 a brazed joint, such as actively brazed joint 100 (shown in FIG. 1), in a vacuum furnace. As noted above, the joining metal alloy of the brazed joint has a solidus temperature and a liquidus temperature. During forming 202, the joining metal alloy is heated in the furnace to a first temperature that is higher than the liquidus temperature to facilitate joining first component 102 and second component 104 (both shown in FIG. 1) to each other. After first component 102 and second component 104 are joined together, the heat treatment processing may be performed.

For example, method 200 also includes cooling 204 the brazed joint to a second temperature that is lower than the solidus temperature of the joining metal alloy, and maintaining 206 the second temperature within the vacuum furnace for a predefined duration. It is believed that maintaining 206 at the second temperature, within the vacuum furnace and of joining metal alloy, facilitates initiating the segregation of the phases within the joining metal alloy. The second temperature may be higher than about 90 percent, higher than about 95 percent, or higher than about 98 percent of the solidus temperature of the joining metal alloy in a pre-processed state. The second temperature is maintained 206 for a predefined duration of between about 20 minutes and 120 minutes. The vacuum furnace and the brazed joint may then be cooled and heated again to define a heating and cooling cycle. **In** one embodiment, the method 200 also includes performing 208 a plurality of heating and cooling cycles on the brazed joint.

**In** the exemplary embodiment, each heating and cooling cycle includes heating the brazed joint to a third temperature that is lower than the solidus temperature, and cooling the brazed joint from the third temperature. The third temperature may be equal to, higher than, or lower than the second temperature. The heating step in the cycle includes heating the brazed joint in the vacuum furnace set to a temperature, such as the third temperature, that is lower than the solidus temperature for a duration defined within a range between about 20 minutes and about 30 minutes. The cooling step in the cycle includes cooling the brazed joint, after the heating duration has elapsed, to an ambient temperature within a duration that is less than about 10 minutes, or less than about 5 minutes. For example, cooling of the brazed joint may be accelerated by directing a stream of compressed air towards the brazed joint. The heating step of the next heating and cooling cycle may then be initiated, by the setting the vacuum furnace to a temperature, within one minute of the brazed joint being cooled to the ambient temperature. As such, the thermal cycling is believed to accelerate and enhance the segregation of phases within the joining metal alloy. **In an** alternative embodiment, the cooling step in the cycle includes cooling the brazed joint, after the heating duration as elapsed, to an ambient temperature within a duration of approximately 2.5 hours.

As used herein, "ambient temperature" refers to a temperature range having a lower limit of about 15 degrees Celsius, and an upper limit of about 30 degrees Celsius.

Any number of heating and cooling cycles may be performed 208 on the brazed joint that enables method 200 to function as described herein. For example, the heat treatment processing of the brazed joint may include the performance of a predetermined number of heating and cooling cycles, such as at least 2 heating and cooling cycles, at least 3 heating and cooling cycles, or at least 7 heating and cooling cycles.

After completion of the predetermined number of heating and cooling cycles, the brazed joint may be subjected to a non-destructive inspection procedure and/or installed within an assembly, such as within the hot gas path of a gas turbine engine. The non-destructive inspection is used to verify the coverage, and thus the strength of, the bond between first component 102 and second component 104. An example non-destructive inspection technique includes, but is not limited to, an ultrasonic inspection. **In** some embodiments, the temperature within the hot gas path of a gas turbine engine may be up to a predetermined temperature, such as about 600 degrees Celsius. **In** the exemplary embodiment, the brazed joint processed in accordance with method 200 is configured to operate within environments having a temperature greater than the predetermined temperature. For example, the brazed joint processed in accordance with method 200 has a liquidus temperature greater than the predetermined temperature.

The embodiments described herein relate to a method of processing a joint. The method and its more particular embodiments described herein facilitate increasing the liquid temperature of a joining metal alloy used in the actively brazed joint. For one instance, the processing steps of the method facilitate the formation of regions of segregated crystallization with a volume of the joining metal alloy, each region is formed from an increased concentration of individual elements of the alloy. The individual elements may have a greater liquidus temperature than the alloy as a whole. As such, the operating temperature of the actively brazed joint is facilitated to be enhanced.

The above description is meant to be exemplary only, and one skilled in the art will recognize that changes may be made to the embodiments described without departing from the scope of the invention as herein claimed is set forth in the appended claims.

Exemplary embodiments of the herein claimed subject matter are described above in detail. The herein claimed subject matter is not limited to the specific embodiments described herein. For example, the methods described herein are not limited to practice with only joints to be used in the hot gas path of a gas turbine engine as described herein. Rather, the exemplary embodiment can be implemented and utilized in connection with many other applications.

## Claims

1. A method (200) of processing a joint (100), said method comprising:
forming (202) an actively brazed joint in a vacuum furnace from at least two components (102, 104) coupled together by a volume (106) of a joining metal alloy having a solidus temperature and a liquidus temperature, wherein the joining metal alloy is heated to a first temperature that is higher than the liquidus temperature in the vacuum furnace; and
cooling (204) the actively brazed joint to a second temperature that is lower than the solidus temperature;
and maintaining (206) the second temperature within the vacuum furnace for a predefined duration to form at least one region (108) of segregated crystallization within the volume of the joining metal alloy, wherein the at least one region of segregated crystallization is configured to increase the liquidus temperature of a layer (107) of brazed metal, formed from the joining metal alloy, between the at least two components.

2. The method in accordance with Claim 1 further comprising performing (208) a plurality of heating and cooling cycles on the actively brazed joint, wherein each heating and cooling cycle comprises:
heating the actively brazed joint (100) to a third temperature lower than the solidus temperature; and
cooling the actively brazed joint from the third temperature.

3. The method in accordance with Claim 2, wherein performing (208) each heating and cooling cycle comprises:
heating the actively brazed joint (100) in the vacuum furnace set to a temperature that is lower than the solidus temperature for a duration defined within a range between about 20 minutes and about 120 minutes; and
cooling the actively brazed joint to an ambient temperature within a duration that is less than about 10 minutes.

4. The method in accordance with Claim 1, wherein forming (202) an actively brazed joint (100) comprises forming the actively brazed joint from a joining metal alloy that includes silver, copper, indium, and at least one active element.

5. The brazed joint in accordance with Claim 4, wherein forming (202) the actively brazed joint (100) comprises forming the actively brazed joint from a joining metal alloy including the at least one active element that includes titanium, hafnium, zirconium, or niobium.

6. The method in accordance with Claim 4, wherein forming (202) the actively brazed joint (100) comprises forming the actively brazed joint from a joining metal alloy that includes silver defined within a range between about 55 percent and about 65 percent by weight, copper defined within a range between about 20 percent and about 30 percent by weight, indium defined within a range between about 5 percent and about 30 percent by weight, and the at least one active element at less than about 10 percent by weight.

## Patentansprüche

1. Verfahren (200) zum Bearbeiten einer Verbindung (100), das Verfahren umfassend:
Ausbilden (202) einer aktiv gelöteten Verbindung in einem Vakuumofen aus mindestens zwei Komponenten (102, 104), die durch ein Volumen (106) einer Verbindungsmetalllegierung, die eine Solidustemperatur und eine Liquidustemperatur aufweist, miteinander gekoppelt sind, wobei die Verbindungsmetalllegierung auf eine erste Temperatur erhitzt wird, die höher als die Liquidustemperatur in dem Vakuumofen ist; und
Abkühlen (204) der aktiv gelöteten Verbindung auf eine zweite Temperatur, die niedriger als die Solidustemperatur ist;
und Aufrechterhalten (206) der zweiten Temperatur innerhalb des Vakuumofens für eine vordefinierte Dauer, um mindestens einen Bereich (108) von segregierter Kristallisation innerhalb des Volumens der Verbindungsmetalllegierung auszubilden, wobei der mindestens eine Bereich von segregierter Kristallisation konfiguriert ist, um die Liquidustemperatur einer Schicht (107) von gelötetem Metall, die aus der Verbindungsmetalllegierung ausgebildet ist, zwischen den mindestens zwei Komponenten zu erhöhen.

2. Verfahren nach Anspruch 1, ferner umfassend ein Durchführen (208) einer Vielzahl von Heiz- und Kühlzyklen an der aktiv gelöteten Verbindung, wobei jeder Heiz- und Kühlzyklus umfasst:
Erhitzen der aktiv gelöteten Verbindung (100) auf eine dritte Temperatur, die niedriger als die Solidustemperatur ist; und
Abkühlen der aktiv gelöteten Verbindung von der dritten Temperatur.

3. Verfahren nach Anspruch 2, wobei das Durchführen (208) jedes Heiz- und Kühlzyklus umfasst:
Erhitzen der aktiv gelöteten Verbindung (100) in dem Vakuumofen, der auf eine Temperatur eingestellt ist, die niedriger als die Solidustemperatur ist, für eine Dauer, die innerhalb einer Spanne zwischen etwa 20 Minuten und etwa 120 Minuten definiert ist; und
Abkühlen der aktiv gelöteten Verbindung auf Umgebungstemperatur innerhalb einer Dauer, die weniger als etwa 10 Minuten beträgt.

4. Verfahren nach Anspruch 1, wobei das Ausbilden (202) einer aktiv gelöteten Verbindung (100) das Ausbilden der aktiv gelöteten Verbindung aus einer Verbindungsmetalllegierung umfasst, die Silber, Kupfer, Indium und mindestens ein aktives Element einschließt.

5. Lötverbindung nach Anspruch 4, wobei das Ausbilden (202) der aktiv gelöteten Verbindung (100) das Ausbilden der aktiv gelöteten Verbindung aus einer Verbindungsmetalllegierung umfasst, die mindestens ein aktives Element einschließt, das Titan, Hafnium, Zirkonium oder Niob einschließt.

6. Verfahren nach Anspruch 4, wobei das Ausbilden (202) der aktiv gelöteten Verbindung (100) das Ausbilden der aktiv gelöteten Verbindung aus einer Verbindungsmetalllegierung umfasst, die Silber, das innerhalb einer Spanne zwischen etwa 55 und etwa 65 Gewichtsprozent definiert ist, Kupfer, das innerhalb einer Spanne zwischen etwa 20 und etwa 30 Gewichtsprozent definiert ist, Indium, das innerhalb einer Spanne zwischen etwa 5 und etwa 30 Gewichtsprozent definiert ist und das mindestens eine aktive Element in einer Menge von weniger als etwa 10 Gewichtsprozent einschließt.

## Revendications

1. Procédé (200) de traitement d'un joint (100), ledit procédé comprenant :
la formation (202) d'un joint activement brasé dans un four à vide à partir d'au moins deux composants (102, 104) accouplés ensemble par un volume (106) d'un alliage métallique d'assemblage ayant une température de solidus et une température de liquidus, dans lequel l'alliage métallique d'assemblage est chauffé à une première température supérieure à la température de liquidus dans le four à vide ; et
le refroidissement (204) du joint activement brasé à une deuxième température qui est inférieure à la température de solidus ;
et le maintien (206) de la deuxième température au sein du four à vide pendant une durée prédéfinie pour former au moins une région (108) de cristallisation séparée au sein du volume de l'alliage métallique d'assemblage, dans lequel l'au moins une région de cristallisation séparée est conçue pour augmenter la température de liquidus d'une couche (107) de métal brasé, formée à partir de l'alliage métallique d'assemblage, entre les au moins deux composants.

2. Procédé selon la revendication 1, comprenant en outre la réalisation (208) d'une pluralité de cycles de chauffage et de refroidissement sur le joint activement brasé, dans lequel chaque cycle de chauffage et de refroidissement comprend :
le chauffage du joint activement brasé (100) à une troisième température inférieure à la température de solidus ; et
le refroidissement du joint activement brasé à partir de la troisième température.

3. Procédé selon la revendication 2, dans lequel la réalisation (208) de chaque cycle de chauffage et de refroidissement comprend :
le chauffage du joint activement brasé (100) dans le four à vide réglé à une température qui est inférieure à la température du solidus pendant une durée définie au sein d'une plage comprise entre environ 20 minutes et environ 120 minutes ; et
le refroidissement du joint activement brasé à une température ambiante au sein d'une durée qui est inférieure à environ 10 minutes.

4. Procédé selon la revendication 1, dans lequel la formation (202) d'un joint activement brasé (100) comprend la formation du joint activement brasé à partir d'un alliage métallique d'assemblage qui comporte de l'argent, du cuivre, de l'indium et au moins un élément actif.

5. Joint brasé selon la revendication 4, dans lequel la formation (202) du joint activement brasé (100) comprend la formation du joint activement brasé à partir d'un alliage de métal d'assemblage comportant l'au moins un élément actif qui comporte le titane, le hafnium, le zirconium ou le niobium.

6. Procédé selon la revendication 4, dans lequel la formation (202) du joint activement brasé (100) comprend la formation du joint activement brasé à partir d'un alliage de métaux d'assemblage qui comporte de l'argent défini au sein d'une plage comprise entre environ 55 % et environ 65 % en poids, du cuivre défini au sein d'une plage comprise entre environ 20 % et environ 30 % en poids, de l'indium défini au sein d'une plage comprise entre environ 5 % et environ 30 % en poids, et l'au moins un élément actif à moins d'environ 10 % en poids.
